# EUROPEAN PATENT SPECIFICATION

(11) **EP 4 129 752 B1**
(45) Date of publication and mention of the grant of the patent: **04.11.2026**
(21) Application number: 21784976.9
(22) Date of filing: 09.04.2021
(51) Int. Cl.: B60L 58/30, B60L 58/40, B60L 15/20, H01M 8/04298

(54) **PURE ELECTRIC AVAILABLE POWER DETERMINATION METHOD AND SYSTEM, AND VEHICLE**
VERFAHREN UND SYSTEM ZUR BESTIMMUNG DER REINEN VERFÜGBAREN ELEKTRISCHEN LEISTUNG UND FAHRZEUG
PROCÉDÉ ET SYSTÈME DE DÉTERMINATION DE PUISSANCE DISPONIBLE ÉLECTRIQUE PURE, ET VÉHICULE

(30) Priority: 10.04.2020 CN 202010281158
(43) Date of publication of application: 08.02.2023
(73) Proprietor: Great Wall Motor Company Limited, Baoding, Hebei 071000 (CN)
(72) Inventor: WU, Maiqing, Baoding City, Hebei 071000 (CN); WANG, Shengbo, Baoding City, Hebei 071000 (CN); LI, Lei, Baoding City, Hebei 071000 (CN); LIU, Zhiwei, Baoding City, Hebei 071000 (CN); HAO, Yang, Baoding City, Hebei 071000 (CN); ZHANG, Gengnan, Baoding City, Hebei 071000 (CN); WANG, Linxiao, Baoding City, Hebei 071000 (CN); SHEN, Yazhou, Baoding City, Hebei 071000 (CN); ZHOU, Mingwang, Baoding City, Hebei 071000 (CN); GENG, Yanlong, Baoding City, Hebei 071000 (CN)
(74) Representative: dompatent
(86) International application number: PCT/CN2021/086223
(87) International publication number: WO 2021/204262

(56) References cited:
- CN-A- 105 083 268
- CN-A- 107 719 163
- CN-A- 107 719 163
- CN-A- 108 790 848
- CN-A- 108 819 767
- CN-A- 109 823 157
- CN-A- 110 194 065
- CN-A- 110 789 403
- CN-A- 111 717 077
- JP-A- 2001 266 917

## Description

### TECHNICAL FIELD

The present invention relates to the technical field of new-energy vehicles and, more particularly, to a method and system for determining a pure electric available power and a vehicle.

### BACKGROUND

Currently, with the increasingly serious global environmental problems, new-energy vehicles have been rapidly developed.

Fuel cell vehicles, as green environmental protection new-energy vehicles, use a battery pack and a fuel cell system as the power devices, and, by using a controlling system, enable the two power devices to actively cooperate and match, to realize an optimum energy allocation, thereby obtaining the dual effects of an optimum driving performance and an optimum economic efficiency with a low energy and a high efficiency.

In order to realize the above-described effects, it is required to firstly determine the available output power of the battery pack for the utilization to coordinating energy, and ensure reasonable controlling on the vehicle speed, controlling on the acceleration performance and controlling on the starting-up and shutting-down of the fuel cell system, to, on the precondition that the normal operation and work of the power systems of the entire vehicle should be ensured, satisfy the requirements by the driver on the power performance and the comfortableness of the vehicle.

However, the existing mode of determining the available output power of the battery pack requires complicated logical operations based on the transmission ratio of the gearbox and the rotational speed of the motor, and, because the rotational speed of the motor has a high deviation, the calculated power easily has a high deviation. Moreover, because, during the entire process of the travelling of the vehicle, energy recovery might happen at any time, if the available output power of the battery pack is displayed in a meter, the existing mode of determining the available power of the battery pack results in jumping of the available-power displaying pointer of the meter, which brings an adverse visual feeling of the user.

Document CN107719163A discloses a method for determining a pure electric available power in a vehicle.

### SUMMARY

The present invention is set out in the independent claims whereas preferred embodiments and further implementations are outlined in the dependent claims, description and figures.

### BRIEF DESCRIPTION OF THE DRAWINGS

In order to more clearly illustrate the technical solutions of the embodiments of the present invention or the related art, the figures that are required to describe the embodiments or the related art will be briefly introduced below. Apparently, the figures that are described below are embodiments of the present invention, and a person skilled in the art can obtain other figures according to these figures without paying creative work.

The drawings, which form part of the present invention, are intended to provide a further understanding of the present invention. The illustrative embodiments of the present invention and their explanation are intended to interpret the present invention, and do not inappropriately limit the present invention. In the drawings:
FIG. 1 is a schematic flow chart of the method for determining a pure electric available power according to an embodiment of the present invention;
FIG. 2 is a flow chart of the implementation of the method for determining a pure electric available power according to an embodiment of the present invention;
FIG. 3 is a schematic structural diagram of the system for determining a pure electric available power according to an embodiment of the present invention;
FIG. 4 schematically shows a block diagram of a computing and processing device for executing the method according to the present invention; and
FIG. 5 schematically shows a storage unit for maintaining or carrying a program code for implementing the method according to the present invention.

### DETAILED DESCRIPTION

The invention is defined by the appended claims.

In order to make the objects, the technical solutions and the advantages of the embodiments of the present invention clearer, the technical solutions of the embodiments of the present invention will be clearly and completely described below with reference to the drawings of the embodiments of the present invention. Apparently, the described embodiments are merely certain embodiments of the present invention, rather than all of the embodiments. All of the other embodiments that a person skilled in the art obtains on the basis of the embodiments of the present invention without paying creative work fall within the protection scope of the present invention.

The embodiments of the present application will be described in further detail below with reference to the drawings. Although the drawings illustrate the embodiments of the present application, it should be understood that the present application may be implemented in various forms, which should not be limited by the embodiments illustrated herein. In contrast, the purpose of providing those embodiments is to more clearly understand the present application, and to completely convey the scope of the present application to a person skilled in the art.

It should be noted that, subject to the avoiding of any conflict, the embodiments and the features of the embodiments of the present invention may be combined.

The present invention will be described in detail below with reference to the drawings and the embodiments.

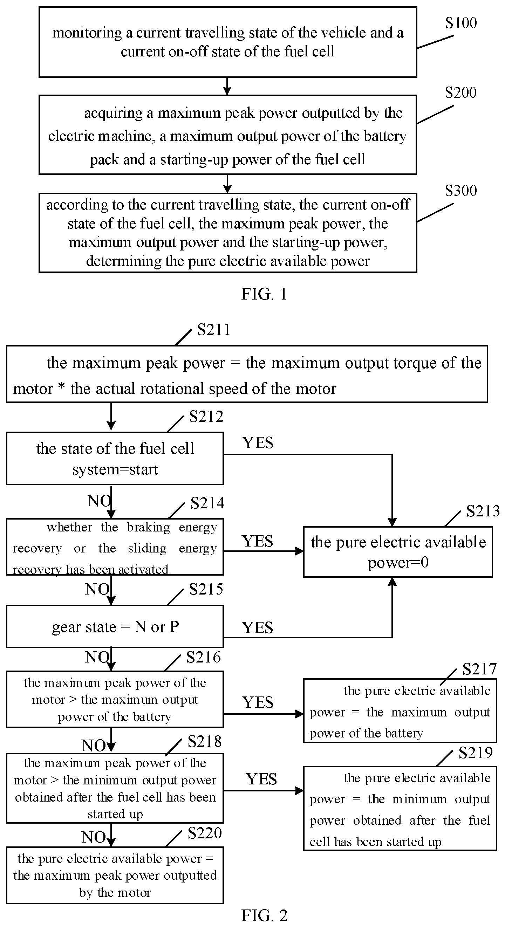

Referring to FIG. 1, FIG. 1 shows a schematic flow chart of the method for determining a pure electric available power according to an embodiment of the present invention. The method for determining a pure electric available power according to the embodiment of the present invention is applied to a fuel cell vehicle, the vehicle further includes a battery pack and a motor, and the fuel cell and the battery pack are electrically connected to the motor, wherein the method includes the steps S100-S300.

In an embodiment of the present invention, the fuel cell and the battery pack are electrically connected to the motor; in other words, the fuel cell and the battery pack may supply energy to the motor, to drive the vehicle to travel. In practical applications, it is required to, determine that the motor is driven by the fuel cell and/or the battery pack to rotate according to the power demand, the travelling state and the energy-consumption economic efficiency of the vehicle, or, in other words, determine the particular allocation of the energy for driving the motor to operate between the fuel cell and the battery pack.

Step S100: monitoring a current travelling state of the vehicle and a current on-off state of the fuel cell.

In the step S100, because the power demands of the vehicle in different travelling states are different, correspondingly, the operation states of the batteries are also different, to deal with the power demands of the vehicle in the different travelling states. Therefore, it is required to monitor the current travelling state of the vehicle, which is used to determine the available power of the battery pack.

In the step S100, when the fuel cell has not been started up, the vehicle is driven completely by the battery pack, and the available power of the battery pack is determined jointly by the performance of the battery pack itself and the outputting performance of the motor. However, when the fuel cell has been started up, because the energy-consumption economic efficiency of the battery pack is lower than that of the fuel cell, in order to realize a better energy-consumption economic efficiency, it is required to correspondingly adjust the available power of the battery pack. In other words, the on-off state of the fuel cell also influences the available power of the battery pack. Therefore, it is required to monitor the current on-off state of the fuel cell for determining the available power of the battery pack.

Step S200: acquiring a maximum peak power outputted by the motor, a maximum output power of the battery pack and a starting-up power of the fuel cell.

In the step S200, the maximum peak power outputted by the motor refers to the maximum output power that the motor can reach under the current rotational-speed condition, and the power also refers to the upper limit value of the power that the vehicle may practically output on the precondition that the output power of the battery pack is sufficient.

The maximum output power of the battery pack refers to the upper limit value of the power that the battery pack can output in the current state, and the maximum output power is decided by the electric quantity of the battery pack and the performance of the battery pack. The starting-up power of the fuel cell refers to the required power of the vehicle that triggers the fuel cell to start up.

Optionally, the starting-up power refers to a minimum output power of the fuel cell when driving the motor by using the fuel cell has a higher efficiency than an efficiency of driving the motor by using the battery pack. In other words, it is pre-configured that the fuel cell starts up merely under the vehicle power demand in which the energy-consumption economic efficiency of the fuel cell is higher than the energy-consumption economic efficiency of the battery pack, which can result in the optimum overall energy consumption of the vehicle.

Optionally, the maximum peak power outputted by the motor may be obtained by calculating by using the current rotational speed of the motor in combination with the external characteristic curve of the motor.

The external characteristic curve represents the correspondence relation between the output power and the output torque of the motor and the rotational speed. According to the external characteristic curve, the maximum output powers and the maximum output torques of the motor at different rotational speeds may be determined. In the external characteristic curve, with the increasing of the rotational speed of the motor, the output power of the motor gradually increases, while output torque of the motor maintains constant, at which point the driving motor is in a constant-torque state. The rotational speed increases to the rotational speed when the output power of the motor has reached its maximum power value, i.e., the inflection-point rotational speed. Subsequently, with the continuously increasing of the rotational speed, the output torque of the motor starts to decrease, while its output power maintains at the state of the maximum power value, at which point the motor is in a constant-power state.

In practical applications, the external characteristic curve is required to be determined in advance by testing, and, because of the difference in the performances of vehicles, different vehicles require being provided with different external characteristic curves.

Optionally, the maximum peak power outputted by the motor may be determined by using the current rotational speed of the motor and the maximum output torque in the above-described external characteristic curve. Particularly, the maximum peak power Pm outputted by the motor may be obtained by calculating by using the following formula: Pm = the maximum output torque of the motor × the current rotational speed of the motor/9550.

In practical applications, the maximum peak power Pm may be displayed in a vehicle meter, and the maximum output power of the vehicle may be added to be displayed, to exhibit the operation state of the motor more intuitively. Particularly, that may be exhibited in the manner of Pm = (the maximum output torque of the motor × the actual rotational speed of the motor/9550)/the maximum output power of the vehicle * 100%. The maximum output power of the vehicle is a calibrated value (to be determined, TBD), and is determined by the overall performance of the vehicle.

In practical applications, the maximum output power of the vehicle, the maximum output power of the battery pack and the starting-up power of the fuel cell may be acquired by accessing an entire-vehicle controller, the battery pack and the fuel cell respectively via a Controller Area Network (CAN).

S300: according to the current travelling state, the current on-off state of the fuel cell, the maximum peak power, the maximum output power and the starting-up power, determining the pure electric available power.

In the step S300, by analyzing the current travelling state of the vehicle and the current on-state of the fuel cell, whether the battery pack can output a power is determined. And, when the battery pack may output a power, the maximum exportable power when merely the battery pack outputs electric energy, i.e., the pure electric available power, is determined from the maximum peak power, the maximum output power and the starting-up power. Moreover, when, by analyzing the current travelling state of the vehicle and the current on-off state of the fuel cell, it is determined that the battery pack cannot output a power, then the pure electric output power of the vehicle is 0.

As compared with the prior art, the method for determining a pure electric available power according to the present invention has the following advantages:

In the method, the current travelling state of the vehicle and the first on-off state of the fuel cell are monitored, and the maximum peak power outputted by the motor, the maximum output power of the battery pack and the starting-up power of the fuel cell are acquired; and, subsequently, according to the current travelling state, the current on-off state of the fuel cell, the maximum peak power, the maximum output power and the starting-up power, the pure electric available power is determined. The pure electric available power may be quickly determined by using merely the travelling state of the vehicle, the on-off state of the fuel cell, the maximum peak power of the motor, the maximum output power of the battery pack and the starting-up power of the fuel cell, without complicated logical operation, and the operation states of the vehicle, the fuel cell system, the motor and the battery pack are taken into consideration at a same time, whereby the determined pure electric available power is closer to the actual available power, which solves the problem of the existing mode of determining the pure electric available power of fuel cell vehicles that complicated logical operations are required and the calculation result has a high deviation.

Optionally, the vehicle according to the embodiments of the present invention is a vehicle that has the function of energy recovery. In other words, the motor may rotate by the driving by the battery pack and/or the fuel cell, to drive the vehicle to travel. At the same time, when the vehicle requires decelerating and braking, after electromagnetically converting part of the kinetic energy of the vehicle into electric energy, the motor may also charge the battery pack, to store the converted electric energy into the battery pack, thereby realizing the energy recovery. The battery pack is not only used to supply electric power to the motor and the other electricity consuming components of the vehicle, but is also used to store the electric energy generated when the motor performs energy recovery.

The process of the energy recovery refers to the process of, by using the motor, electromagnetically converting part of the kinetic energy when the vehicle brakes or decelerates into electric energy and storing it in the power battery, and generating a certain braking resistance on the motor at a same time, to be used for the deceleration and braking of the vehicle. The direction of the braking resistance is opposite to the rotation direction of the motor, and therefore it can enable the vehicle to brake or decelerate. From the process of the energy recovery, it can be seen that, when the vehicle is performing the energy recovery, the battery pack is not required to output a power.

Therefore, in an embodiment, when the fuel cell vehicle has the energy-recovery function, in the method for determining a pure electric available power according to the embodiments of the present invention, the current travelling state particularly includes the current gear state of the vehicle and the current on-off state of the energy-recovery function.

In the present embodiment, because the power demands of the vehicle in different gear states are different, correspondingly, the operation states of the batteries are also different, to deal with the power demands of the vehicle in the different gear states. Therefore, it is required to monitor the current gear state of the vehicle, which is used to determine the available power of the battery pack.

In the present embodiment, the current on-off state of the energy-recovery function includes two cases that the energy-recovery function is in the on-state and that the energy-recovery function is in the off-state. Because, when the energy-recovery function of the vehicle is in the on-state and in the off-state, the power demands of the vehicle are different, correspondingly, the operation states of the battery pack are also different, to deal with the power demands of the vehicle in the different states of the energy-recovery function. Therefore, it is required to monitor the current on-off state of the energy-recovery function of the vehicle, which is used to determine the available power of the battery pack.

Optionally, in an embodiment, in the method for determining a pure electric available power according to the embodiments of the present invention, the step S300 particularly includes the steps S301-S302:

S301: when the current gear state of the vehicle is a non-travelling gear state, and/or the energy-recovery function is in an on-state, and/or the fuel cell is in an on-state, determining the pure electric available power to be 0.

Because, when the vehicle is in a non-travelling gear state, the system determines by default that the vehicle does not have a power demand, it is determined that the output power of the battery pack is 0; in other words, the pure electric available power is 0. In practical applications, the non-travelling gear state is particularly expressed as the P gear or the N gear.

Because, when the energy-recovery function is in the on-state, the vehicle does not have a power demand, and the battery pack is required to store the electric energy generated by the energy recovery, it is determined that the output power of the battery pack is 0; in other words, the pure electric available power is 0. In practical applications, that the energy-recovery function is in the on-state includes a braking-energy-recovery-activation state and a sliding-energy-recovery-activation state. The sliding-energy-recovery-activation state refers to the state in which the vehicle is sliding and the accelerator pedal does not have a torque demand. The sliding-energy-recovery-activation state is triggered when the vehicle reaches the threshold of the vehicle speed, the brake pedal is not trodden and the wheel-side-driving-torque request from the accelerator pedal is less than -5Nm. Preferably, the sliding-energy-recovery-activation state is triggered when the vehicle reaches the threshold of the vehicle speed and the accelerator pedal and the brake pedal are not trodden.

Because, when the fuel cell is in the on-state, the energy-consumption economic efficiency of the fuel cell is higher than the energy-consumption economic efficiency of the battery pack, in order to realize the optimum effect of the energy consumption of the vehicle, the vehicle is controlled to be driven completely by the fuel cell. Therefore, it is determined that the output power of the battery pack is 0; in other words, the pure electric available power is 0.

S302: when the current gear state of the vehicle is a travelling gear state, the energy-recovery function is in an off-state, and the fuel cell is in an off-state, according to a smallest value among the maximum peak power, the maximum output power and the starting-up power, determining the pure electric available power.

In the step S302, when the vehicle is in a travelling gear state, the vehicle has a power demand, and when the energy-recovery function of the vehicle has not been started, the battery pack may be used to output electric energy. Moreover, because the fuel cell has not been started up, the required power of the vehicle is provided completely by the battery pack. Therefore, when the current gear state of the vehicle is a travelling gear state, the energy-recovery function is in an off-state, and the fuel cell is in an off-state, the pure electric available power of the battery pack is limited and determined jointly by the performance of the motor, the performance of the battery pack and the performance of the fuel cell, which is similar to the Cannikin Law. Particularly, the pure electric available power of the battery pack is the minimum value among the maximum peak power of the motor, the maximum output power of the battery pack and the starting-up power of the fuel cell. In practical applications, the travelling gear state is particularly expressed as the D gear or the R gear.

In the step S302, the pure electric available power is the maximum peak power of the motor or the maximum output power of the battery pack or the starting-up power of the fuel cell, the maximum output power of the battery pack and the starting-up power of the fuel cell are relatively constant, and the maximum peak power of the motor is decided by the maximum output torque of the motor and the current rotational speed of the motor; in other words, the maximum peak power of the motor and the rotational speed of the motor are of a linear variation relation. Therefore, the pure electric available power that is determined in the state defined by the step S302 does not have step changing. When the available output power is displayed in a meter, that does not result in jumping of the available-power displaying pointer. On the contrary, between the state of the starting-up after parking in which the pure electric available power is 0, and the state in which the pure electric available power is the above-described smaller value, the pure electric available power increases with the rotational speed of the motor, which presents a process of smooth changing, thereby bringing the user an excellent visual feeling.

The present embodiment does not only solve the problem of the existing mode of determining the pure electric available power of fuel cell vehicles that complicated logical operations are required and the calculation result has a high deviation, but also solves the problem of the existing mode of determining the available power of battery packs causing the available-power displaying pointer of the meter jumps, which brings an adverse visual feeling of the user.

In practical applications, referring to FIG. 2, FIG. 2 shows a flow chart of the implementation of the method for determining a pure electric available power according to an embodiment of the present invention.

As shown in FIG. 2, the process includes, in the step S211, firstly, by using the maximum output torque of the motor and the actual rotational speed of the motor, determining the maximum peak power outputted by the motor, and subsequently executing the step S212;
in the step S212, determining the on-off state of the fuel cell system, if the fuel cell is in the on-state, then executing the step S213, and if the fuel cell is in the off-state, then executing the step S214;
in the step S213, determining the pure electric available power to be 0;
in the step S214, determining whether the braking energy recovery or the sliding energy recovery has been activated, i.e., determining whether the energy-recovery function has been started up, if the energy recovery power is in the on-state, then executing the step S213, and if the energy recovery power is not started up, then executing the step S215;
in the step S215, determining the gear state of the vehicle, and if the gear state is a non-travelling gear such as the N gear or the P gear, then executing the step S213, or else executing the step S216;
in the step S216, determining whether the maximum peak power outputted by the motor is greater than the maximum output power of the battery, if the maximum peak power outputted by the motor is greater than the maximum output power of the battery, then executing the step S217, and determining the pure electric available power to be the maximum output power of the battery, and if the maximum peak power outputted by the motor is not greater than the maximum output power of the battery, then executing the step S218; and
in the step S218, determining whether the maximum peak power outputted by the motor is greater than the minimum output power obtained after the fuel cell has been started up, i.e., determining whether the maximum peak power outputted by the motor is greater than the starting-up power of the fuel cell, if the maximum peak power outputted by the motor is greater than the starting-up power of the fuel cell, then executing the step S219, and determining the pure electric available power to be the minimum output power obtained after the fuel cell has been started up, and if the maximum peak power outputted by the motor is not greater than the starting-up power of the fuel cell, then executing the step S220, and determining the pure electric available power to be the maximum peak power outputted by the motor.

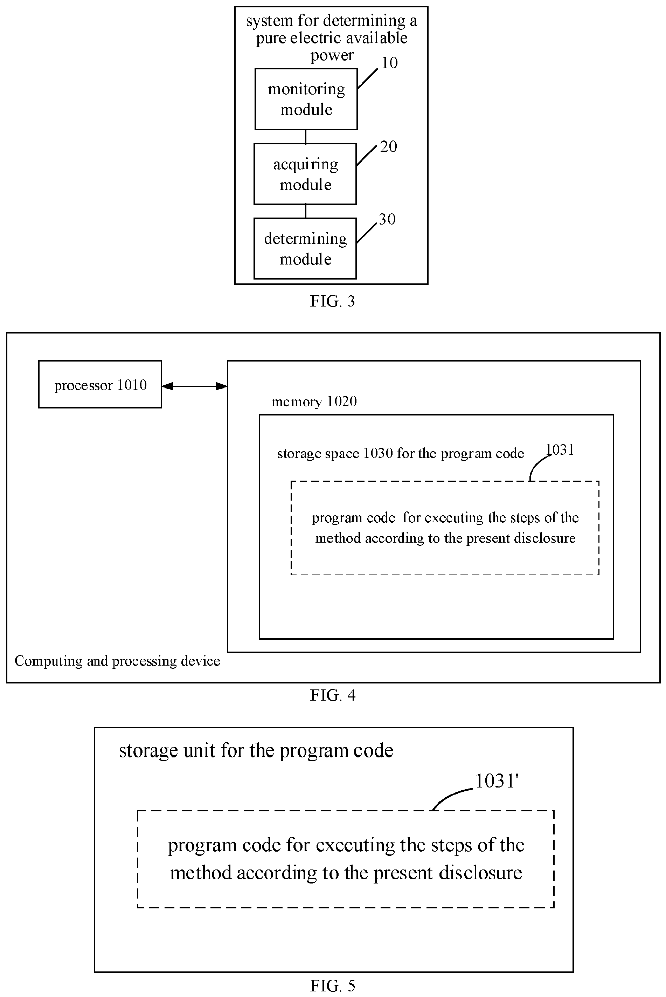

Another object of the present invention is to provide a system for determining a pure electric available power. The system is applied to a fuel cell vehicle, the vehicle further includes a battery pack and a motor, and the fuel cell and the battery pack are electrically connected to the motor. Referring to FIG. 3, FIG. 3 shows a schematic structural diagram of the system for determining a pure electric available power according to an embodiment of the present invention. The system includes:
a monitoring module 10 configured for monitoring a current travelling state of the vehicle and a current on-off state of the fuel cell;
an acquiring module 20 configured for acquiring a maximum peak power outputted by the motor, a maximum output power of the battery pack and a starting-up power of the fuel cell; and
a determining module 30 configured for, according to the current travelling state, the current on-off state of the fuel cell, the maximum peak power, the maximum output power and the starting-up power, determining the pure electric available power.

The system according to the embodiments of the present invention, by using the monitoring module 10, monitors the current travelling state of the vehicle and the current on-off state of the fuel cell, and, by using the acquiring module 20, acquires the maximum peak power outputted by the motor, the maximum output power of the battery pack and the starting-up power of the fuel cell; and, subsequently, by using the determining module 30, according to the current travelling state, the current on-off state of the fuel cell, the maximum peak power, the maximum output power and the starting-up power, determines the pure electric available power. The pure electric available power may be quickly determined by using merely the travelling state of the vehicle, the on-off state of the fuel cell, the maximum peak power of the motor, the maximum output power of the battery pack and the starting-up power of the fuel cell, without complicated logical operation, and the operation states of the vehicle, the fuel cell system, the motor and the battery pack are taken into consideration simultaneously, whereby the determined pure electric available power is closer to the actual available power.

Optionally, in the system for determining a pure electric available power, the starting-up power refers to a minimum output power of the fuel cell when driving the motor by using the fuel cell has a higher efficiency than an efficiency of driving the motor by using the battery pack.

Optionally, in the system for determining a pure electric available power, the current travelling state includes a current gear state of the vehicle and a current on-off state of an energy-recovery function.

Optionally, in the system for determining a pure electric available power, the determining module 30 includes:
a first determining unit configured for, when the current gear state of the vehicle is a non-travelling gear state, and/or the energy-recovery function is in an on-state, and/or the fuel cell is in an on-state, determining the pure electric available power to be 0; and
a second determining unit configured for, when the current gear state of the vehicle is a travelling gear state, the energy-recovery function is in an off-state, and the fuel cell is in an off-state, then according to a smallest value among the maximum peak power, the maximum output power and the starting-up power, determining the pure electric available power.

Optionally, in the system for determining a pure electric available power, the acquiring module 20 includes:
an acquiring unit configured for acquiring a maximum output torque of the motor and a current rotational speed of the motor; and
a determining unit configured for, according to the maximum output torque and the current rotational speed, determining the maximum peak power.

Yet another object of the present invention is to provide a vehicle, the vehicle including a fuel cell, a battery pack and a motor, the fuel cell and the battery pack being electrically connected to the motor, wherein the vehicle further includes the system for determining a pure electric available power stated above.

The system for determining a pure electric available power and the vehicle have the same advantages as those of the above method for determining a pure electric available power over the prior art, which is not discussed herein further.

In conclusion, in the method and system for determining a pure electric available power and the vehicle according to the present invention, the current travelling state of the vehicle and the current on-off state of the fuel cell are monitored, and the maximum peak power outputted by the motor, the maximum output power of the battery pack and the starting-up power of the fuel cell are acquired; and, subsequently, according to the current travelling state, the current on-off state of the fuel cell, the maximum peak power, the maximum output power and the starting-up power, the pure electric available power is determined. The pure electric available power may be quickly determined by using merely the travelling state of the vehicle, the on-off state of the fuel cell, the maximum peak power of the motor, the maximum output power of the battery pack and the starting-up power of the fuel cell, without complicated logical operation, and the operation states of the vehicle, the fuel cell system, the motor and the battery pack are taken into consideration at a same time, whereby the determined pure electric available power is closer to the actual available power, which solves the problems of the existing mode of determining the pure electric available power of fuel cell vehicles that complicated logical operations are required and the calculation result has a high deviation and that the available-power displaying pointer in the meter easily jumps.

A person skilled in the art can clearly understand that, in order for the convenience and concision of the description, the particular working processes of the above-described systems, devices and units may refer to the corresponding processes according to the above-described process embodiments, and are not discussed herein further.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to the actual demands to realize the purposes of the solutions of the embodiments. A person skilled in the art can understand and implement the technical solutions without paying creative work.

Each component embodiment of the present invention may be implemented by hardware, or by software modules that are operated on one or more processors, or by a combination thereof. A person skilled in the art should understand that some or all of the functions of some or all of the components of the computing and processing device according to the embodiments of the present invention may be implemented by using a microprocessor or a digital signal processor (DSP) in practice. The present invention may also be implemented as apparatus or device programs (for example, computer programs and computer program products) for implementing part of or the whole of the method described herein. Such programs for implementing the present invention may be stored in a computer-readable medium, or may be in the form of one or more signals. Such signals may be downloaded from an Internet website, or provided on a carrier signal, or provided in any other forms.

For example, FIG. 4 shows a computing and processing device that can implement the method according to the present invention. The computing and processing device traditionally includes a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 5. The storage unit may have storage segments or storage spaces with similar arrangement to the memory 1020 of the computing and processing device in FIG. 4. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

The "one embodiment", "an embodiment" or "one or more embodiments" as used herein means that particular features, structures or characteristics described with reference to an embodiment are included in at least one embodiment of the present invention. Moreover, it should be noted that here an example using the wording "in an embodiment" does not necessarily refer to the same one embodiment.

The description provided herein describes many concrete details. However, it can be understood that the embodiments of the present invention may be implemented without those concrete details. In some of the embodiments, well-known processes, structures and techniques are not described in detail, so as not to affect the understanding of the description.

In the claims, any reference signs between parentheses should not be construed as limiting the claims. The word "include" does not exclude elements or steps that are not listed in the claims. The word "a" or "an" preceding an element does not exclude the existing of a plurality of such elements. The present invention may be implemented by means of hardware including several different elements and by means of a properly programmed computer. In unit claims that list several devices, some of those devices may be embodied by the same item of hardware. The words first, second, third and so on do not denote any order. Those words may be interpreted as names.

## Claims

1. A method for determining a pure electric available power, the method being applied to a vehicle comprising a fuel cell, the vehicle further comprising a battery pack and a motor, the fuel cell and the battery pack being electrically connected to the motor, wherein the method comprises:
monitoring a current travelling state of the vehicle and a current on-off state of the fuel cell;
acquiring a maximum peak power outputted by the motor, a maximum output power of the battery pack and a starting-up power of the fuel cell; and
according to the current travelling state, the current on-off state of the fuel cell, the maximum peak power, the maximum output power and the starting-up power, determining the pure electric available power,
**characterized in that** the current travelling state comprises a current gear state of the vehicle and a current on-off state of an energy-recovery function,
wherein the step of, according to the current travelling state, the current on-off state of the fuel cell, the maximum peak power, the maximum output power and the starting-up power, determining the pure electric available power comprises:
when the current gear state of the vehicle is a non-travelling gear state, and/or the energy-recovery function is in an on-state, and/or the fuel cell is in an on-state, determining the pure electric available power to be 0; and
when the current gear state of the vehicle is a travelling gear state, the energy-recovery function is in an off-state, and the fuel cell is in an off-state, according to a smallest value among the maximum peak power, the maximum output power and the starting-up power, determining the pure electric available power.

2. The method for determining a pure electric available power according to claim 1, wherein the starting-up power refers to a minimum output power of the fuel cell when driving the motor by using the fuel cell has a higher efficiency than an efficiency of driving the motor by using the battery pack.

3. The method for determining a pure electric available power according to claim 1, wherein the step of acquiring the maximum peak power outputted by the motor comprises:
acquiring a maximum output torque of the motor and a current rotational speed of the motor; and
according to the maximum output torque and the current rotational speed, determining the maximum peak power.

4. A system for determining a pure electric available power, the system being applied to a vehicle comprising a fuel cell, the vehicle further comprising a battery pack and a motor, the fuel cell and the battery pack being electrically connected to the motor, wherein the system comprises:
a monitoring module configured for monitoring a current travelling state of the vehicle and a current on-off state of the fuel cell;
an acquiring module configured for acquiring a maximum peak power outputted by the motor, a maximum output power of the battery pack and a starting-up power of the fuel cell; and
a determining module configured for, according to the current travelling state, the current on-off state of the fuel cell, the maximum peak power, the maximum output power and the starting-up power, determining the pure electric available power,
**characterized in that** the current travelling state comprises a current gear state of the vehicle and a current on-off state of an energy-recovery function; and
the determining module comprises:
a first determining unit configured for, when the current gear state of the vehicle is a non-travelling gear state, and/or the energy-recovery function is in an on-state, and/or the fuel cell is in an on-state, determining the pure electric available power to be 0; and
a second determining unit configured for, when the current gear state of the vehicle is a travelling gear state, the energy-recovery function is in an off-state, and the fuel cell is in an off-state, then according to a smallest value among the maximum peak power, the maximum output power and the starting-up power, determining the pure electric available power.

5. The system for determining a pure electric available power according to claim 4, wherein the starting-up power refers to a minimum output power of the fuel cell when driving the motor by using the fuel cell has a higher efficiency than an efficiency of driving the motor by using the battery pack.

6. The system for determining a pure electric available power according to claim 4, wherein the acquiring module comprises:
an acquiring unit configured for acquiring a maximum output torque of the motor and a current rotational speed of the motor; and
a determining unit configured for, according to the maximum output torque and the current rotational speed, determining the maximum peak power.

7. A vehicle, the vehicle comprising a fuel cell, a battery pack and a motor, the fuel cell and the battery pack being electrically connected to the motor, wherein the vehicle further comprises the system for determining a pure electric available power according to any one of claims 4 to 6.

8. A computing and processing device, wherein the computing and processing device comprises:
a memory storing a computer-readable code; and
one or more processors, wherein when the computer-readable code is executed by the one or more processors, the computing and processing device executes the method for determining a pure electric available power according to any one of claims 1 to 3.

9. A computer program comprising instructions which, when the program is executed by a computer, cause the computer to carry out the steps of the method according to any of claims 1-3.

10. A computer-readable [storage] medium comprising instructions which, when executed by a computer, cause the computer to carry out the steps of the method according to any of claims 1-3.

## Patentansprüche

1. Verfahren zum Bestimmen einer reinen elektrischen verfügbaren Leistung, wobei das Verfahren auf ein Fahrzeug angewendet wird, das eine Brennstoffzelle aufweist, wobei das Fahrzeug ferner ein Batteriepack und einen Motor aufweist, wobei die Brennstoffzelle und das Batteriepack elektrisch mit dem Motor verbunden sind, wobei das Verfahren umfasst:
Überwachen eines aktuellen Fahrzustands des Fahrzeugs und eines aktuellen Ein-/Aus-Zustands der Brennstoffzelle;
Erfassen einer maximalen Spitzenleistung, die von dem Motor abgegeben wird, einer maximalen Ausgangsleistung des Batteriepacks und der Anlaufleistung der Brennstoffzelle; und
Bestimmen, anhand des aktuellen Fahrzustands, des aktuellen Ein-/Aus-Zustands der Brennstoffzelle, der maximalen Spitzenleistung, der maximalen Ausgangsleistung und der Anlaufleistung, der reinen elektrischen verfügbaren Leistung,
**dadurch gekennzeichnet, dass** der aktuelle Fahrzustand einen aktuellen Gangzustand des Fahrzeugs und einen aktuellen Ein-/Aus-Zustand einer Energierückgewinnungsfunktion umfasst,
wobei der Schritt des Bestimmens der reinen elektrischen verfügbaren Leistung anhand des aktuellen Fahrzustands, des aktuellen Ein-/Aus-Zustands der Brennstoffzelle, der maximalen Spitzenleistung, der maximalen Ausgangsleistung und der Anlaufleistung umfasst:
wenn der aktuelle Gangzustand des Fahrzeugs ein Nicht-Fahrgangzustand ist und/oder die Energierückgewinnungsfunktion in einem Ein-Zustand ist und/oder die Brennstoffzelle in einem Ein-Zustand ist, Bestimmen der reinen elektrischen verfügbaren Leistung als 0; und
wenn der aktuelle Gangzustand des Fahrzeugs ein Fahrgangzustand ist, die Energierückgewinnungsfunktion in einem Aus-Zustand ist und die Brennstoffzelle in einem Aus-Zustand ist, Bestimmen der reinen elektrischen verfügbaren Leistung anhand eines kleinsten Werts aus der maximalen Spitzenleistung, der maximalen Ausgangsleistung und der Anlaufleistung.

2. Verfahren zum Bestimmen einer reinen elektrischen verfügbaren Leistung nach Anspruch 1, wobei sich die Anlaufleistung auf eine Mindestausgangsleistung der Brennstoffzelle bezieht, wenn der Antrieb des Motors unter Verwendung der Brennstoffzelle einen höheren Wirkungsgrad aufweist als der Antrieb des Motors unter Verwendung des Batteriepacks.

3. Verfahren zum Bestimmen einer reinen elektrischen verfügbaren Leistung nach Anspruch 1, wobei der Schritt des Erfassens der vom Motor abgegebenen maximalen Spitzenleistung umfasst:
Erfassen eines maximalen Ausgangsdrehmoments des Motors und einer aktuelle Drehzahl des Motors; und
Bestimmen der maximalen Spitzenleistung anhand des maximalen Ausgangsdrehmoments und der aktuellen Drehzahl.

4. System zum Bestimmen einer reinen elektrischen verfügbaren Leistung, wobei das System auf ein Fahrzeug angewendet wird, das eine Brennstoffzelle aufweist, wobei das Fahrzeug ferner ein Batteriepack und einen Motor aufweist, wobei die Brennstoffzelle und das Batteriepack elektrisch mit dem Motor verbunden sind, wobei das System aufweist:
ein Überwachungsmodul, das so ausgebildet ist, dass es einen aktuellen Fahrzustand des Fahrzeugs und einen aktuellen Ein-/Aus-Zustands der Brennstoffzelle überwacht;
ein Erfassungsmodul, das so ausgebildet ist, dass es eine maximale Spitzenleistung, die vom Motor abgegeben wird, eine maximale Ausgangsleistung des Batteriepacks und eine Anlaufleistung der Brennstoffzelle erfasst; und
ein Bestimmungsmodul, das so ausgebildet ist, dass es anhand des aktuellen Fahrzustands, des aktuellen Ein-/Aus-Zustands der Brennstoffzelle, der maximalen Spitzenleistung, der maximalen Ausgangsleistung und der Anlaufleistung die reine elektrische verfügbare Leistung bestimmt,
**dadurch gekennzeichnet, dass** der aktuelle Fahrzustand einen aktuellen Gangzustand des Fahrzeugs und einen aktuellen Ein-/Aus-Zustand einer Energierückgewinnungsfunktion umfasst; und
das Bestimmungsmodul aufweist:
eine erste Bestimmungseinheit, die so ausgebildet ist, dass sie, wenn der aktuelle Gangzustand des Fahrzeugs ein Nicht-Fahrgangzustand ist und/oder die Energierückgewinnungsfunktion in einem Ein-Zustand ist und/oder die Brennstoffzelle in einem Ein-Zustand ist, die reine elektrische verfügbare Leistung als 0 bestimmt; und
eine zweite Bestimmungseinheit, die so ausgebildet ist, dass sie, wenn der aktuelle Gangzustand des Fahrzeugs ein Fahrgangzustand ist, die Energierückgewinnungsfunktion in einem Aus-Zustand ist und die Brennstoffzelle in einem Aus-Zustand ist, die reine elektrische verfügbare Leistung anhand eines kleinsten Werts aus der maximalen Spitzenleistung, der maximalen Ausgangsleistung und der Anlaufleistung bestimmt.

5. System zum Bestimmen einer reinen elektrischen verfügbaren Leistung nach Anspruch 4, wobei sich die Anlaufleistung auf eine Mindestausgangsleistung der Brennstoffzelle bezieht, wenn der Antrieb des Motors unter Verwendung der Brennstoffzelle einen höheren Wirkungsgrad aufweist als der Antrieb des Motors unter Verwendung des Batteriepacks.

6. System zum Bestimmen einer reinen elektrischen verfügbaren Leistung nach Anspruch 4, wobei das Erfassungsmodul umfasst:
eine Erfassungseinheit, die so ausgebildet ist, dass sie ein maximales Ausgangsdrehmoment des Motors und eine aktuelle Drehzahl des Motors erfasst; und
eine Bestimmungseinheit, die so ausgebildet ist, dass sie anhand des maximalen Ausgangsdrehmoments und der aktuellen Drehzahl die maximale Spitzenleistung bestimmt.

7. Fahrzeug, wobei das Fahrzeug eine Brennstoffzelle, ein Batteriepack und einen Motor aufweist, wobei die Brennstoffzelle und das Batteriepack elektrisch mit dem Motor verbunden sind, wobei das Fahrzeug ferner das System zum Bestimmen einer reinen elektrischen verfügbaren Leistung nach einem der Ansprüche 4 bis 6 aufweist.

8. Rechen- und Verarbeitungsvorrichtung, wobei die Rechen- und Verarbeitungsvorrichtung aufweist:
einen Speicher, auf dem ein computerlesbarer Code gespeichert ist; und
einen oder mehreren Prozessoren, wobei die Rechen- und Verarbeitungsvorrichtung, wenn der computerlesbare Code von dem einen oder den mehreren Prozessoren ausgeführt wird, das Verfahren zum Bestimmen einer reinen elektrischen verfügbaren Leistung nach einem der Ansprüche 1 bis 3 ausführt.

9. Computerprogramm, das Anweisungen aufweist, die bei der Ausführung des Programms durch einen Computer den Computer veranlassen, die Schritte des Verfahrens nach einem der Ansprüche 1-3 auszuführen.

10. Computerlesbares [Speicher-]Medium, das Anweisungen aufweist, die bei der Ausführung durch einen Computer den Computer veranlassen, die Schritte des Verfahrens nach einem der Ansprüche 1-3 auszuführen.

## Revendications

1. Procédé de détermination d'une puissance électrique pure disponible, le procédé étant appliqué à un véhicule comprenant une pile à combustible, le véhicule comprenant en outre un bloc-batterie et un moteur, la pile à combustible et le bloc-batterie étant connectés électriquement au moteur, dans lequel le procédé comprend les étapes consistant à :
surveiller un état de circulation courant du véhicule et un état activé-désactivé courant de la pile à combustible ;
acquérir une puissance de crête maximale délivrée par le moteur, une puissance de sortie maximale du bloc-batterie et une puissance de démarrage de la pile à combustible ; et
conformément à l'état de circulation courant, à l'état activé-désactivé courant de la pile à combustible, à la puissance de crête maximale, à la puissance de sortie maximale et à la puissance de démarrage, déterminer la puissance électrique pure disponible,
**caractérisé en ce que** l'état de circulation courant comprend un état de rapport courant du véhicule et un état activé-désactivé courant d'une fonction de récupération d'énergie,
dans lequel l'étape, conformément à l'état de circulation courant, à l'état activé-désactivé courant de la pile à combustible, à la puissance de crête maximale, à la puissance de sortie maximale et à la puissance de démarrage, de détermination de la puissance électrique pure disponible consiste à :
lorsque l'état de rapport courant du véhicule est un état de rapport de non-circulation, et/ou que la fonction de récupération d'énergie est dans un état activé, et/ou que la pile à combustible est dans un état activé, déterminer la puissance électrique pure disponible comme étant de 0 ; et
lorsque l'état de rapport courant du véhicule est un état de rapport de circulation, que la fonction de récupération d'énergie est dans un état désactivé, et que la pile à combustible est dans un état désactivé, conformément à une valeur la plus petite parmi la puissance de crête maximale, la puissance de sortie maximale et la puissance de démarrage, déterminer la puissance électrique pure disponible.

2. Procédé de détermination d'une puissance électrique pure disponible selon la revendication 1, dans lequel la puissance de démarrage se réfère à une puissance de sortie minimale de la pile à combustible lorsque l'entraînement du moteur en utilisant la pile à combustible a un rendement supérieur à un rendement d'entraînement du moteur en utilisant le bloc-batterie.

3. Procédé de détermination d'une puissance électrique pure disponible selon la revendication 1, dans lequel l'étape d'acquisition de la puissance de crête maximale délivrée par le moteur consiste à :
acquérir un couple de sortie maximal du moteur et une vitesse de rotation courante du moteur ; et
conformément au couple de sortie maximal et à la vitesse de rotation courante, déterminer la puissance de crête maximale.

4. Système de détermination d'une puissance électrique pure disponible, le système étant appliqué à un véhicule comprenant une pile à combustible, le véhicule comprenant en outre un bloc-batterie et un moteur, la pile à combustible et le bloc-batterie étant connectés électriquement au moteur, dans lequel le système comprend :
un module de surveillance configuré pour surveiller un état de circulation courant du véhicule et un état activé-désactivé courant de la pile à combustible ;
un module d'acquisition configuré pour acquérir une puissance de crête maximale délivrée par le moteur, une puissance de sortie maximale du bloc-batterie et une puissance de démarrage de la pile à combustible ; et
un module de détermination configuré pour, conformément à l'état de circulation courant, à l'état activé-désactivé courant de la pile à combustible, à la puissance de crête maximale, à la puissance de sortie maximale et à la puissance de démarrage, déterminer la puissance électrique pure disponible,
**caractérisé en ce que** l'état de circulation courant comprend un état de rapport courant du véhicule et un état activé-désactivé courant d'une fonction de récupération d'énergie ; et
le module de détermination comprend :
une première unité de détermination configurée pour, lorsque l'état de rapport courant du véhicule est un état de rapport de non-circulation, et/ou que la fonction de récupération d'énergie est dans un état activé, et/ou que la pile à combustible est dans un état activé, déterminer la puissance électrique pure disponible comme étant de 0 ; et
une seconde unité de détermination configurée pour, lorsque l'état de rapport courant du véhicule est un état de rapport de circulation, que la fonction de récupération d'énergie est dans un état désactivé, et que la pile à combustible est dans un état désactivé, alors, conformément à une valeur la plus petite parmi la puissance de crête maximale, la puissance de sortie maximale et la puissance de démarrage, déterminer la puissance électrique pure disponible.

5. Système de détermination d'une puissance électrique pure disponible selon la revendication 4, dans lequel la puissance de démarrage se réfère à une puissance de sortie minimale de la pile à combustible lorsque l'entraînement du moteur en utilisant la pile à combustible a un rendement supérieur à un rendement d'entraînement du moteur en utilisant le bloc-batterie.

6. Système de détermination d'une puissance électrique pure disponible selon la revendication 4, dans lequel le module d'acquisition comprend :
une unité d'acquisition configurée pour acquérir un couple de sortie maximal du moteur et une vitesse de rotation courante du moteur ; et
une unité de détermination configurée pour, conformément au couple de sortie maximal et à la vitesse de rotation courante, déterminer la puissance de crête maximale.

7. Véhicule, le véhicule comprenant une pile à combustible, un bloc-batterie et un moteur, la pile à combustible et le bloc-batterie étant connectés électriquement au moteur, dans lequel le véhicule comprend en outre le système de détermination d'une puissance électrique pure disponible selon l'une quelconque des revendications 4 à 6.

8. Dispositif de calcul et de traitement, dans lequel le dispositif de calcul et de traitement comprend :
une mémoire maintenant un code lisible par ordinateur ; et
un ou plusieurs processeurs, dans lequel, lorsque le code lisible par ordinateur est exécuté par le ou les processeurs, le dispositif de calcul et de traitement exécute le procédé de détermination d'une puissance électrique pure disponible selon l'une quelconque des revendications 1 à 3.

9. Programme d'ordinateur comprenant des instructions qui, lorsque le programme est exécuté par un ordinateur, amènent l'ordinateur à mettre en œuvre les étapes du procédé selon l'une quelconque des revendications 1 à 3.

10. Support [d'informations] lisible par ordinateur comprenant des instructions qui, lorsqu'elles sont exécutées par un ordinateur, amènent l'ordinateur à mettre en œuvre les étapes du procédé selon l'une quelconque des revendications 1 à 3.
